Europäisches Patentamt

European Patent Office

Office européen des brevets

(11) Publication number: **0 330 714**
**A1**

(12) **EUROPEAN PATENT APPLICATION**

(21) Application number: **88103138.9**

(22) Date of filing: **02.03.88**

(51) Int. Cl.⁴: **B29B 17/00** , **G07F 7/06** , **B30B 9/30**

(43) Date of publication of application:
**06.09.89 Bulletin 89/36**

(84) Designated Contracting States:
**AT BE CH DE ES FR GB GR LI LU NL SE**

(71) Applicant: **GOVONI SPA**
**Via Giorgi 27**
**Modena(IT)**

(72) Inventor: **Gulmini, Carlo**
**Via Ex-Dogana 7**
**Casumaro (Ferrara)(IT)**

(74) Representative: **Sassatelli, Franco T., Dr.**
**c/o INIP via Ruggi 5**
**I-40137 Bologna(IT)**

(54) **Unit for reclaiming and recycling plastic material containers to throw.**

㊗ The proceeding employs a machine which automatically squeezes the container by maintaining its trim, selects the resulting squeezed shape according to the material by means of a deviator and sends it to discharge determining its ·stowage in a compact mass stowed in different packing to send for recovering. Fitted into the cavity (2), the container is conveyed by means of a gravitydischarge guide tobe squeezed between a couple of rollers (7 and 8), the lower (7) of which is moved by inertia and the higher motor-driven one (8) is heated by means of resistances and fitted with a system of linear relief (9) with diecasting points (10) foreseen for this purpose to press the material, which carry out a squeezed form of the recovered material. An infrared photoelectric cell (11) selects the introduced container according to its material and, by means of switch (14), allow to discharge the squeezed form into a collector (13) foreseen for this purpose and hinged on a bagclip (14). When the counter fitted on the unit advices the presence of the foreseen loading forms in the bag, it gives a signal which lets the operator open the entrance lid and unhook and take out the bag, which is then replaced with the empty one in its place.

## Unit for reclaiming and recycling plastic material containers to throw.

The invention refers to a unit available in several points of distribution to allow recycling empty containers brought back by users, by means of recovering the materials selected according to their kind and available in conformity with the sequeezing shapes, and maintaining their trim in compact mass in bags with a view to determining their rational transportation and stocking. On a detachable label, the unit calculates the number of containers put in and a unitary value attributed to them determining a total amount for the lot of containers which have been put in for the user in different ways, of the microdistributor and of the base distribution manager as recovery value. What precedes acts as an incentive means for collecting the containers which, therefore, are no longer to throw away but are recovered and will no longer pollute the environment.

The problem of the distribution of plastic material containers is at present difficult to solve on account of their encumbrance which causes high stockage and transport costs, as well as because their are of different materials which cannot be selected for re-using and must be burnt. Consequently, these containers are considered as polluting material, particularly on account of the dioxine arising when they are burnt. Moreover, the costs of these ridding plants turn out to be very high.

The invention device carries out the integral solution of the problem by means of a new proceeding contemporarily carries out the selection according to the container material automatically, as well as their stowaging in assembled mass in bags to send to recovering. A recovering of the value attributed to the container is thus obtained for the user and/or collector as well as stockaging and transport costs of the materials foreseen for recycling. The use of the burner is thus avoided and, consequently, the environment pollution. On a principle, the destination of the recovered materials aims at plastic containers and objects beyond a given size which require an appreciable quantity of material, such as bottles, flagons and several packings.

Substantially, the proceeding employs a machine which automatically squeezes the container by maintaining its trim, selects the resulting squeezed shape according to the material by means of a deviator and sends it to discharge determining its stowage in a compact mass stowed in different packing to send for recovering. Fitted into the cavity, the container is conveyed by means of a gravity discharge guide tobe squeezed between a couple of rollers, the lower of which is moved by inertia and the higher one is heated by means of resistances and fitted with a system of linear reliefs with diecasting points foreseen for this purpose to press the material, which carry out a squeezed form of the recovered material when this one gets out with permanent trim keeping. On the entrance of the conveyor to the squeezing operation, a control counter marking microswitch points out the entrance of the recovering container, and on completion of the inlet phase of a container lot, determines, by means of a counter with ticket delivery computerizer, the possibility of getting the computerization card of the introduced containers, as well as of learning the relevant rescue worth. In the mechanical selection version, an infrared photoelectric cell selects the introduced container according to its material and, by means of a switch, allows to discharge the squeezed form into a collector foreseen for this purpose and hinged on a bagclip. When the counter fitted on the unit advices the presence of the foreseen loading forms in the bag, it gives a signal which lets the operator open the entrance lid and unhook and take out the bag, which is then replaced with an empty one in its place. In a hand-selection version, several input openings are foreseen for each type of employ material to introduce, by means of conveyer, into a squeezing compartment which directly discharges into an underlying collector. The discharge in succession of the squeezing forms, with permanent trim maintenance, causes a compact mass in the collector which allows to stow the selected recovered material with essential encumbering.

An execution version of the system is illustrated, in a merely indicative way, in the drawings of tables 1 and 2. The version allows to recover only the containers carried out in two different materials, such as for instance PVC and PET. Consequently, in order to carry out units for containers in three or more types of materials, switches and collectors should be foreseen accordingly. So in the manual selection of the containers for each type of material, a different input opening should be foreseen. With reference to the present version as per table 1,

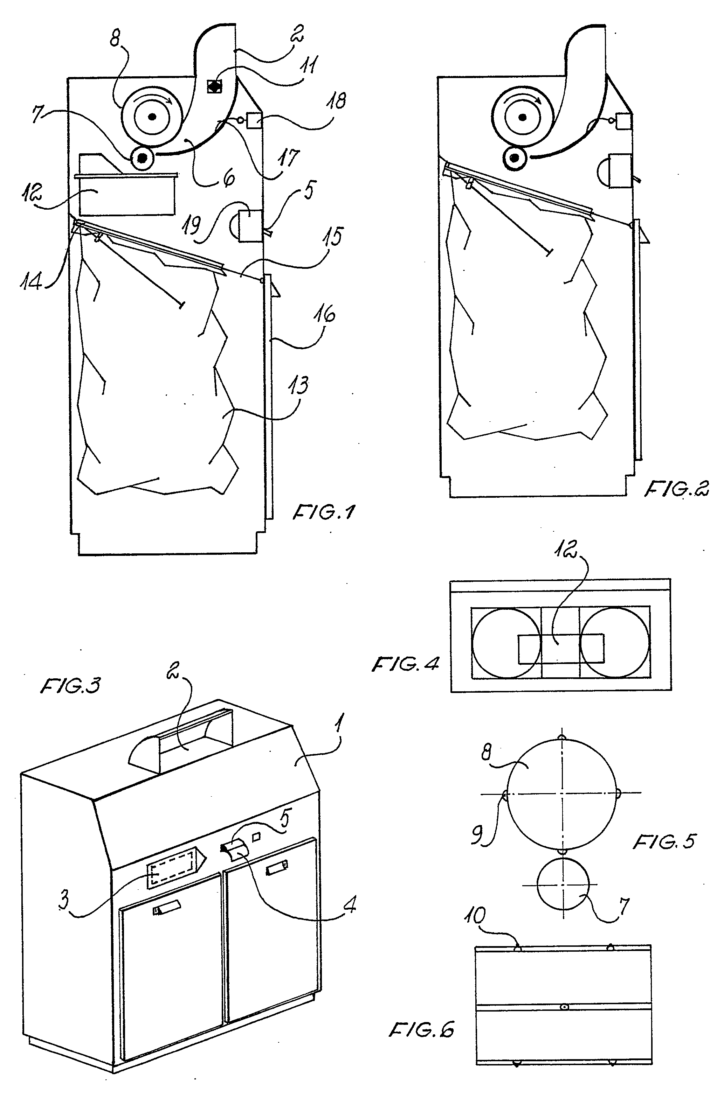

fig. 1 is the schematic view of the operative compartment which works with mechanical selection.

Fig. 2 is the schematic view of another operative compartment with manual selection.

Fig. 3 is the perspective view of a machine working with mechanical selction

Fig. 4 is the schematic view from above of the switch with underlying pair of collectors.

Fig. 5 is the front view of the squeezing roller pair, the higher of which is motor-driven and heated by means of electrical resistances, and is foreseen with a system of rectilinear longitudinal reliefs with 90° phase shift and fitted with several welding points.

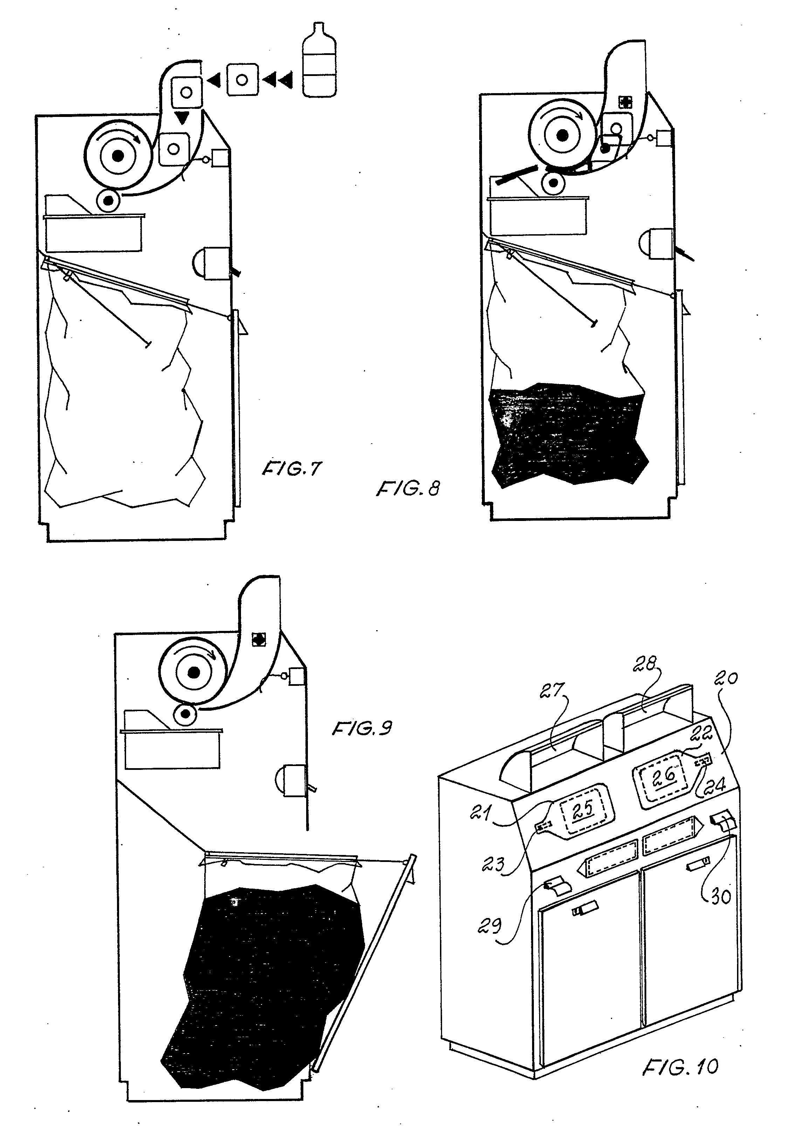

Fig. 6 is the side view of the already mentioned above fitted roller.

Fig. 7 in table 2 is the view of the operative compartment with mechanical selection which can be observed in the beginning phase with containers about to be squeezed after having been introduced into the feeding conveyor.

Fig. 8 is the view of the same compartment as per the previous figure, in which a squeezing form is reaching the switch, while the bag collector is being filled.

Fig. 9 is the view of the same section, according to the two previous figures, with completely filled collector and overturned door brought outwards in order to allow the bag to be taken and unhooked from the imposing rake.

Fig. 10 is the perspective view of a machine working with hand selection.

The mechanical selection version has keel 1 and input opening 2, as well is fitted with a legend square 3 referring to the drawing ticket to fix the computerization data and the recovery worth to card 4, to pull from deliverer 5. Through opening 2, the container on conveyor 6 is squeezed through the lower inertia roller 7 and the upper heated motor-driven one 8 fitted with reliefs 9 and melting points 10. The squeezed selected form in the employ material, during the input phase, is guided by the infra-red photoelectrical cell 11 on the switch 12 and falls into the bag-shaped collector 13 kept in position by the bag holding rake 14 connected with door 16 by means of 15. In introduction on the container conveyor, a feel er 17 picks up its presence and transmits to the reckoner-marker 18 micro-controller, connected with the bottle counter delivery ticket 19 which, by means of deliverer 5, lets ticket 4 get out with the computerization data and the rescue worth.

In the hand selection version, on the keel type machine 20, several legends 21 and 22 are foreseen for individualizing respectively on squares 23 and 24 of the two foreseen types of materials, and on panels 25 and 26 of the container marks which employ those materials in order to facilitate mnemonic checking recognition. Consequently, the machine is foreseen with selection bozzles 27 and 28 and distinct deliverers 29 and 30 of the cards for the computerization and evaluation of recovery.

In the executions, switchers are foreseen along with collectors suitable for many types of materials to select. The careening shape, squeezing and collecting means, the conveyors and selectors, as well as the laying, computerization of data and value of recovery attached to the materials may be foreseen in different ways. The co-ordination of the system operative phases may similarly be foreseen in different ways.

## Claims

1) Unit for reclaiming and recycling plastic material containers to throw, characterized by the fact that employs a machine which automatically squeezes the container by maintaining its trim, selects the resulting squeezed shape according to the material by means of a deviator and sends it to discharge determining its stowage in a compact mass stowed in different packing to send for recovering. Fitted into the cavity (2), the container is conveyed by means of a gravity discharge guide tobe squeezed between a couple of rollers (7 and 8), the lower (7) of which is moved by inertia and the higher motor-driven (8) is heated by means of resistance and fitted with a system of linear reliefs (9) wich diecasting points (10) foreseen for this purpose to press the material, which carry out a squeezed form of the recovered material when this one gets out with permanent trim keeping.

2) Unit for reclaiming and recycling plastic material containers to throw, as per claim 1, characterized by the fact that on the entrance of the conveyer to the squeezing operation, a control counter marking microswitch points out the entrance of the recovering container, and on completion of the inlet phase of a container lot, determines, by means of a counter with ticket delivery computerizer, the possibility of getting the computerization card of the introduced containers, as well as of learning the relevant rescue worth.

3) Unit for reclaiming and recycling plastic material containers to throw, as per claim 1, characterized by the fact that in the mechanical selection version an infrared photoelectrica cell (11) selects the intorduced container according to its material and, by means of a switch (12), allows to discharge the squeezed form into a collector (13) foreseen for this purpose and hinged on a bagclip (14).

4) Unit for reclaiming and recycling plastic material containers to throw, as per claim 1, characterized by the fact that when the counter fitted on the unit advices the presence of the foreseen loading forms in the bag, it gives a signal which lets the operator open the entrance lid and unhook and take out the bag, which is then replaced with an empty one in its place.

5) Unit fore reclaiming and recycling plastic material containers to throw, as per claim 1, characterized by the fact that in a hand selection version, several input openings are foreseen for each type of employ material to introduce, by means of conveyor, into a squeezing compartment which directly discharges into an underlying container.

6) Unit for reclaiming and recycling plastic material containers to throw, as per claim 1, characterized by the fact that the discharge in succession of the squeezing forms, with permanent trim maintenance, causes a compact mass in the collector which allows to stow the selected recovered material with essential encumbering.

FIG.1

FIG.2

FIG.3

FIG.4

FIG.5

FIG.6

EP 0 330 714 A1

FIG.7

FIG.8

FIG.9

FIG.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 245 731 (HERBST) <br> * Whole document * <br> --- | 1-6 | B 29 B 17/00 <br> G 07 F 7/06 <br> B 30 B 9/30 |
| X | US-A-4 324 325 (DEWOOLFSON) <br> * Whole document * <br> --- | 1-6 | |
| A | FR-A-2 580 418 (MULLER) <br> * Whole document * <br> --- | 1 | |
| A | DE-A-1 947 729 (HICK) <br> * Figures 1-3 * <br> --- | 1 | |
| A | US-A-4 153 206 (HAEFNER) <br> * Figure 5 * <br> --- | 1 | |
| A | WO-A-8 604 014 (V. GEMERT) <br> * Figure 1 * <br> ----- | 1 | |

TECHNICAL FIELDS SEARCHED (Int. Cl.4)

B 29 B
B 30 B
B 02 C
G 07 F

The present search report has been drawn up for all claims

| Place of search | Date of completion of the search | Examiner |
|---|---|---|
| THE HAGUE | 14-11-1988 | KUSARDY R. |